(19) Europäisches Patentamt
European Patent Office
Office européen des brevets

(11) **EP 3 704 386 B1**

(12) **EUROPÄISCHE PATENTSCHRIFT**

(45) Veröffentlichungstag und Bekanntmachung des Hinweises auf die Patenterteilung:
**17.01.2024 Patentblatt 2024/03**

(21) Anmeldenummer: **18807852.1**

(22) Anmeldetag: **31.10.2018**

(51) Internationale Patentklassifikation (IPC):
**F04D 29/54** *(2006.01)*    **F01D 9/04** *(2006.01)*
**F04D 29/02** *(2006.01)*

(52) Gemeinsame Patentklassifikation (CPC):
**F04D 29/542; F01D 9/041; F01D 9/065;**
**F04D 29/023; F04D 29/544; F04D 29/545;**
F05D 2230/22; F05D 2230/31; F05D 2240/122;
Y02T 50/60

(86) Internationale Anmeldenummer:
**PCT/DE2018/000319**

(87) Internationale Veröffentlichungsnummer:
**WO 2019/086065 (09.05.2019 Gazette 2019/19)**

(54) **GENERATIV GEFERTIGTER ZWISCHENKANAL ZUR ANORDNUNG ZWISCHEN EINEM NIEDERDRUCKVERDICHTER UND EINEM HOCHDRUCKVERDICHTER, SOWIE ENTSPRECHENDES FERTIGUNGSVERFAHREN**

INTERMEDIATE DUCT TO BE PLACED BETWEEN A LOW PRESSURE COMPRESSOR AND A HIGH PRESSURE COMPRESSOR, MADE BY ADDITIVE MANUFACTURING, AND CORRESPONDING MANUFACTURING METHOD

CANAL INTERMÉDIAIRE DESTINÉ À ÊTRE PLACÉ ENTRE UN COMPRESSEUR BASSE PRESSION ET UN COMPRESSEUR HAUTE PRESSION, PRODUIT PAR FABRICATION ADDITIVE, AINSI QUE PROCÉDÉ DE FABRICATION CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2017 DE 102017010129**

(43) Veröffentlichungstag der Anmeldung:
**09.09.2020 Patentblatt 2020/37**

(73) Patentinhaber: **MTU Aero Engines AG**
**80995 München (DE)**

(72) Erfinder:
• **HOMBURG, Ralf**
**85221 Dachau (DE)**
• **SAHOTA, Harsimar**
**85716 Unterschleißheim (DE)**

(56) Entgegenhaltungen:
| | |
|---|---|
| EP-A1- 2 669 474 | EP-A1- 2 995 771 |
| EP-A2- 1 632 648 | WO-A1-2010/123413 |
| WO-A1-2013/165281 | WO-A1-2017/118806 |
| US-A1- 2011 008 156 | US-A1- 2012 243 983 |

**Beschreibung**

Die Erfindung betrifft einen Zwischenkanal zur Anordnung zwischen einem Auslass eines Niederdruckverdichters und einem Einlass eines Hochdruckverdichters einer Strömungsmaschine, ein Verfahren zum Herstellen eines solchen Zwischenkanals sowie eine Strömungsmaschine mit einem derartigen Zwischenkanal.

In einer Strömungsmaschine, die einen Niederdruckverdichter und einen stromab angeordneten Hochdruckverdichter aufweist, wird ein Ausgang des Niederdruckverdichters üblicherweise über einen Zwischen- oder Übergangskanal fluidisch mit einem Eingang des Hochdruckverdichters verbunden. Die Basisgeometrie eines solchen Zwischen- oder Übergangskanals, der beispielsweise bei Flugtriebwerken auch als "Inter Compressor Duct" (ICD) bezeichnet wird, leitet sich aus dem Anspruch ab, die Strömung eines Betriebsfluids der Strömungsmaschine im Betrieb durch den Zwischenkanal hindurch von einem vergleichsweise großen Radius des Niederdruckverdichters auf einen vergleichsweise deutlich kleineren Radius des Hochdruckverdichters umzulenken. Dabei sollen einerseits möglichst wenig aerodynamische Verluste erzeugt werden, andererseits soll eine möglichst hohe Uniformität der Fluidströmung am Austritt des Zwischenkanals gewährleistet werden. Ein solcher Zwischenkanal (ICD) verläuft aufgrund der unterschiedlichen Radien von Niederdruck- und Hochdruckverdichter daher relativ steil und umfasst neben einer Außen- und einer Innenwand in der Regel zwei funktionale Elemente, nämlich am Eingang des Zwischenkanals einen sogenannten "OGV-Kranz" (Outlet guide vane), das heißt einen aerodynamisch profilierten Abströmleitkranz, sowie in der Regel mehrere, stromab des Abströmleitkranzes liegende Streben, die auch als Struts oder Stützrippen bezeichnet werden und die Außen- und Innenwand miteinander verbinden und strukturmechanisch abstützen.

Aktuelle Zwischenkanäle zwischen einem Nieder- und einem Hochdruckverdichter werden als Gußteile hergestellt und haben daher notwendigerweise eine relativ einfache Formgebung, was zu Einschränkung hinsichtlich ihrer Funktionalität führt. Insbesondere führen die bekannten Zwischenkanäle zu einem relativ hohen aerodynamischen Verlust und stellen zudem nur eine eingeschränkte Uniformität der ausströmenden Fluidströmung sicher, was zu entsprechenden Wirkungsgradverlusten im stromabliegenden Hochdruckverdichter führt.

WO 2010/123413 A1 offenbart ein generatives Verfahren zu Herstellung einer Triebwerkskomponente aus einer Vielzahl von Schichten, die aus einem Pulverbett aufgeschmolzen werden. Eine Komponenten ist beispielsweise ein Triebwerksring der verschiedene Funktionen vereint: eine äußeres Strömungskanalabschnitt dient der Luftführung des Bypassstroms, ein mittlerer Strömungskanalabschnitt, der radial innen von dem äußeren Strömungskanalabschnitt angeordnet ist, dient der Führung von Zapfluft im Luftsystem des Triebwerks und ein innerer Strömungskanalabschnitt dient der Luftführung und Umlenkung im Verdichter und übernimmt somit die Funktion eines Verdichterzwischenkanals. In dem Verdichterzwischenkanal sind eine Vielzahl von Streben zwischen einer Außenwand und einer Innenwand angeordnet.

WO 2017/118806 A1 betrifft ganz allgemein ein additives Fertigungsverfahren, in dem grundlegende Gesetzmäßigkeiten vorgeschlagen werden, beispielsweise das Überlappen von aufeinanderliegenden verschmolzenen Schichten, deren Winkel größer als 30° ist. Gezeigt ist zudem die Herstellung eines Strömungskanalgehäuses, das Segmentweise aufgebaut ist.

WO 2013/165281 A1 zeigt ein Verdichterzwischengehäuse mit sechs sternförmig angeordneten Hohlstreben, die Innen- und Außengehäuse miteinander verbinden und gegeneinander abstützen. Die Hohlstreben weisen Kanäle zur Zapfluftführung nach außen und innen sowie Öffnungen zum Einströmen der Zapfluft in die Kanäle auf. Das Verdichterzwischengehäuse wird durch Verbinden (schweißen) einer Vielzahl vorgefertigter Elemente gefertigt.

EP 1 632 648 A2 zeigt einen Zwischenkanal (Übergangskanal) mit einer Innen- und einer Außenwand, wobei zwischen den Kanalwände Stützrippen bzw. -streben vorgesehen sind, um Kräfte zu übertragen. Die Kanalwände sind verschiedenartigen in den Kanal hinein verzogen, um entsprechende Strömungen zu erzielen (sog. end-wall-countouring). Für die Streben wird ein Dickenverhältnis von 30% offenbart.

In EP 2 669 474 A1 werden Stützrippen bzw. Streben eines Turbinenzwischenkanals thematisiert, die von Kühlluft in entsprechenden Luftführungen durchströmt sind. Die Kühlluft wird durch in den Streben vorgesehene Ausblasöffnungen an der Hinterkante ausgeblasen, wobei die Ausblasöffnungen verschiedene Gestaltungen annehmen können, unter anderem Ausrundungen aufweisen können, die beispielsweise in Umfangsrichtung auskragen.

US 2011/008156 A1 zeigt ein Hochdruckturbinengitter mit Leitschaufeln, die an Anbindestellen zur Außen- bzw. Innenwand hin eine größere Dicke aufweisen als in einem mittleren Abschnitt. Aufgabe der vorliegenden Erfindung ist es, einen Zwischenkanal zur Anordnung zwischen einem Niederdruckverdichter und einem Hochdruckverdichter einer Strömungsmaschine zu schaffen, welcher eine verbesserte Aerodynamik besitzt und einen verbesserten Wirkungsgrad einer zugeordneten Strömungsmaschine ermöglicht. Weitere Aufgaben der Erfindung bestehen darin, ein Verfahren zum Herstellen eines solchen Zwischenkanals und eine Strömungsmaschine mit einem derartigen Zwischenkanal zu schaffen.

Die Aufgaben werden erfindungsgemäß durch einen Zwischenkanal mit den Merkmalen des Patentanspruchs 1, durch ein Verfahren gemäß Patentanspruch 9 zum Herstellen eines solchen Zwischenkanals sowie durch eine Strömungsmaschine gemäß Patentanspruch 11 mit einem derartigen Zwischenkanal gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft einen Zwischenkanal gemäß Anspruch 1. Eine verbesserte Aerodynamik ist dadurch ermöglicht, dass der Zwischenkanal zumindest teilweise generativ gefertigt ist. Mit anderen Worten ist es erfindungsgemäß vorgesehen, dass der Zwischenkanal teilweise oder vollständig mit Hilfe eines generativen oder additiven Herstellungsverfahrens (additive manufacturing, AM), beispielsweise eines Schichtbauverfahrens wie Lasersintern oder -schmelzen, hergestellt ist. Dies erlaubt im Vergleich zu herkömmlichen Herstellungsverfahren wie Gießen, Fräsen und dergleichen eine kostengünstige, effiziente Herstellung geometrisch komplexer Strukturen, die durch konventionelle Verfahren (Feinguß, Fräsen, PECM und dergleichen) nicht oder nur sehr aufwendig möglich sind. Mit Hilfe von Additive Manufacturing (generativer Fertigung) lässt sich ein solches Bauteil integral fertigen und es könnten auch "exotische" dreidimensionale Wand- und Gaspfadkonturen aus dem Optimierer realisiert werden. Möglich sind beispielsweise in sich verwölbte Struts, komplex profilierte EWCs (End wall contour) und dergleichen. Daneben kann im Rahmen der strukturmechanischen Auslegung, das heißt des Designs des Zwischenkanals, auch die Wandstärken der Außenwand und/oder der Innenwand optimieren und dadurch zusätzlich Gewicht sparen. Aufgrund der verbesserten Aerodynamik kann die Baulänge des Zwischenkanals verkürzt werden, was weitere Gewichtseinsparungen ermöglicht. Im Ergebnis kann ein solcher Zwischen- oder Übergangskanal neben der Reduktion des Kraftstoffverbrauchs einer zugeordneten Strömungsmaschine über die reine Verkürzung (via Trade factor) auch noch ein reduziertes Gewicht aufweisen bei gleicher oder gar verbesserter Führung der Zuströmung zum Hochdruckverdichter im Betriebsbereich der Strömungsmaschine. Dies ermöglicht einen entsprechend höheren Wirkungsgrad der zugeordneten Strömungsmaschine. Vorzugsweise weist der erfindungsgemäße Zwischenkanal mehrere Streben auf, die vorzugsweise gleichmäßig über den Umfang des Zwischenkanals verteilt sind. Durch die freie geometrische Gestaltbarkeit der Strebe(n) können diese neben ihrer mechanischen Stützfunktion gegebenenfalls auch die aerodynamischen Aufgaben des Abströmleitkranzes mitübernehmen, so dass in manchen Ausgestaltungen auf einen Abströmleitkranz verzichtet werden kann. Hierdurch sind zusätzliche Gewichts- und Bauraumeinsparungen möglich. Generell sind "ein/eine" im Rahmen dieser Offenbarung als unbestimmte Artikel zu lesen, also ohne ausdrücklich gegenteilige Angabe immer auch als "mindestens ein/mindestens eine". Umgekehrt können "ein/eine" auch als "nur ein/nur eine" verstanden werden. Allgemein sei angemerkt, dass sich die Begriffe "Axial-" bzw. "axial", "Radial-" bzw. "radial" und "Umfangs-" stets auf die Maschinen- bzw. Rotationsachse der Strömungsmaschine beziehen, sofern sich aus dem Kontext nicht implizit oder explizit etwas anderes ergibt.

In einer vorteilhaften Ausgestaltung der Erfindung ist vorgesehen, dass der Zwischenkanal aus mindestens zwei miteinander verbundenen Segmenten besteht. Dies erleichtert in Abhängigkeit der erforderlichen Größe des Zwischenkanals die generative Herstellung, da derzeit verfügbare Metallsinter- oder -schmelzmaschinen nur einen vergleichsweise kleinen Bauraum zur Verfügung stellen. Darüber hinaus werden durch die segmentierte Bauweise auch der Zusammenbau des Zwischenkanals und sein Einbau in die Strömungsmaschine erleichtert. Vorzugsweise handelt es sich bei den Segmenten um zwei Halbschalen.

In einer weiteren vorteilhaften Ausgestaltung der Erfindung ist vorgesehen, dass die Außenwand und/oder die Innenwand und/oder der Abströmleitkranz und/oder die wenigstens eine Strebe wenigstens einen Hohlraum umfasst. Hierdurch können entsprechende Gewichtseinsparungen realisiert werden. Das Ausbilden eines oder mehrerer Hohlräume ist ebenfalls nur unter Zuhilfenahme des additiven Herstellungsverfahrens sinnvoll möglich, welches einen Leichtbau bei gleicher oder sogar höherer Festigkeit als bei konventionellen Gußteilen ermöglicht.

In einer weiteren vorteilhaften Ausgestaltung der Erfindung ist vorgesehen, dass der wenigstens eine Hohlraum offen oder geschlossen ausgebildet ist und/oder dass der wenigstens eine Hohlraum im Querschnitt rund oder oval ausgebildet ist und/oder dass wenigstens zwei Querschnitte des wenigstens einen Hohlraums versetzt zueinander angeordnet sind und/oder dass der wenigstens eine Hohlraum wenigstens eine Einschnürung aufweist und/oder dass der Hohlraum durch wenigstens eine Stützstrebe, insbesondere durch ein Netzwerk von Stützstreben, abgestützt ist. Hierdurch können insbesondere die Parameter "Gewicht" und "Festigkeit" des Zwischenkanals optimal an den jeweiligen Einsatzzweck angepasst werden.

Weitere Vorteile ergeben sich, indem die Außenwand und/oder die Innenwand und/oder der Abströmleitkranz und/oder die wenigstens eine Strebe eine bionische Bauform aufweist. Gewicht spielt vor allem in der Luftfahrt eine entscheidende Rolle. Gleichzeitig darf aber eine Gewichtsreduktion nicht zu einem Verlust an Stabilität und Zuverlässigkeit führen. Deshalb ist eine bionische Bauform, die Stabilität und Materialeffizienz optimal verbindet, von besonderem Vorteil und kann aufgrund der generativen Herstellung bereits in kleinen Stückzahlen günstig, zuverlässig und mit hoher Wirtschaftlichkeit gefertigt werden. Eine bionische Bauform kann beispielsweise eine Gitter- und/oder Wabenstruktur umfassen. Ebenfalls denkbar sind Gitterstrukturen, die dem Aufbau des Schwammgewebes in Knochen entsprechen oder davon abgeleitet sind. Weiterhin können uneinheitliche Materialfüllgrade, beispielsweise Füllgradienten, realisiert werden.

In einer weiteren vorteilhaften Ausgestaltung der Erfindung ist vorgesehen, dass die wenigstens eine Strebe einen Hohlraum umfasst, der einen Kanal mit einer Einlassöffnung und einer Auslassöffnung zum Durchleiten eines Betriebsfluids durch den Zwischenkanal bildet. Hierdurch können Luft, Öl oder andere Betriebsfluide über den hohlen Innenraum der Strebe durch den Zwischenkanal geleitet werden, um beispielsweise eine Versorgung weiterer Bauteile der zugeordneten Strömungsmaschine sicherzustellen.

Weitere Vorteile ergeben sich, indem ein Füllgrad der wenigstens einen Strebe zwischen 15 % und 95 %, insbesondere zwischen 50 % und 90 % beträgt. Unter dem Füllgrad ist dabei das Verhältnis des Volumens an Vollmaterial zu Volumen an Hohlraum der Strebe zu verstehen. Ein Füllgrad von 50 % bedeutet beispielsweise, dass die Strebe bezogen auf ihr Gesamtvolumen zur Hälfte aus einem festen Aufbauwerkstoff besteht und zur Hälfte hohl ist. Füllgrade zwischen 15 % und 95 % umfassen beispielsweise Füllgrade von 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 %, 90 %, 91 %, 92 %, 93 %, 94 % oder 95 %, wobei entsprechende Zwischenwerte als mitoffenbart anzusehen sind. Vorzugsweise beträgt der Füllgrad 50 % bis 90 %. Auch hierdurch können die Parameter "Gewicht" und "Festigkeit" optimal auf die jeweiligen Betriebsanforderungen abgestimmt werden.

In einer weiteren vorteilhaften Ausgestaltung der Erfindung ist vorgesehen, dass ein Dickenverhältnis von maximaler Dicke zu axialer Länge der wenigstens einen Strebe zwischen 15 % und 45 %, das heißt beispielsweise 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 % oder 45 % beträgt. Unter der Dicke wird dabei für einen Querschnitt in einer bestimmten radialen Höhe der Strebe die maximale Dicke oder Breite in Umfangsrichtung des Zwischenkanals verstanden, während die Länge die maximale Erstreckung der Strebe in axialer Richtung für diesen Querschnitt bezeichnet. Hierdurch können die aerodynamischen Eigenschaften der wenigstens einen Strebe an die jeweiligen Anforderungen der zugeordneten Strömungsmaschine angepasst werden.

Die wenigstens eine Strebe kann in Umfangsrichtung eine Ausrundung aufweisen.

Die Strebe besitzt auf diese Weise besonders vorteilhafte aerodynamische Eigenschaften und verhindert eine unerwünschte Strömungsablösung besonders zuverlässig. Die Ausrundung kann grundsätzlich konvex und/oder konkav ausgebildet sein.

Dabei hat es sich als vorteilhaft gezeigt, wenn ein radialer Verlauf einer Hinterkante der wenigstens einen Strebe zwischen der Außenwand und der Innenwand eine Abweichung in Umfangsrichtung von maximal ±7° bezogen auf den Vollwinkel (360°) aufweist. Dabei kann vorgesehen sein, dass die Strebe nicht nur im Bereich ihrer Hinterkante, sondern auch in in axialer Richtung stromaufwärts liegenden Bereichen oder entlang ihrer gesamten axialen Erstreckung einen entsprechenden radialen Verlauf besitzt.

Gemäß der Erfindung ist vorgesehen, dass der radiale Verlauf der wenigstens einen Strebe zumindest im Bereich ihrer Hinterkante zumindest im Wesentlichen, das heißt mit maximalen Abweichungen von ±2°, innerhalb einer ersten Grenzkontur und einer zweiten Grenzkontur liegt, wobei die erste Grenzkontur durch die Formel (I)

$$y = 71.14x^5 - 179.74x^4 + 134.76x^3 - 2.6539x^2 - 27.72x + 5.5815 \text{ (I)}$$

und die zweite Grenzkontur durch die Formel (II)

$$y = 71.14x^5 - 179.74x^4 + 134.76x^3 - 2.6539x^2 - 27.72x + 1.5815 \text{ (II)}$$

definiert ist, in welchen x (von 0 bis 1) die prozentuale radiale Höhe der Strebe im Bereich ihrer Hinterkante ausgehend von der Innenwand des Zwischenkanals und y die graduelle Abweichung in Umfangsrichtung von einer hypothetischen linearen Hinterkantenkontur mit einem konstanten radialen Verlauf bei 0° (d.h. ausbuchtungsfrei) bezeichnen. Beispielsweise kann der Konturverlauf im Wesentlichen der Formel (III) oder der Formel (IV) entsprechen

$$y = 71.14x^5 - 179.74x^4 + 134.76x^3 - 2.6539x^2 - 27.72x + 3.5815 \text{ (III)}$$

oder

$$y = -323{,}53x^6 + 1050{,}7x^5 - 1285{,}1x^4 + 701{,}58x^3 - 129{,}77x^2 - 18{,}216x + 3{,}5061° \text{ (IV)},$$

welche näherungsweise Konturwerte beschreiben, die für eine bestimmte prozentuale radiale Höhe der Strebe kleiner als die erste Grenzkontur, aber größer als die zweite Grenzkontur sind. Hierdurch können unerwünschte Strömungsabrisse verhindert und eine optimale Anströmung des stromabliegenden Hochdruckverdichters erreicht werden.

Eine besonders leichte und dennoch stabile Realisierungsform des Zwischenkanals wird in weiterer Ausgestaltung dadurch erreicht, dass dieser zumindest überwiegend aus einer Titanlegierung, insbesondere aus Titan 6246, oder aus einer Nickelbasislegierung, insbesondere aus IN100, besteht.

Ein zweiter Aspekt der Erfindung betrifft ein Verfahren zum Herstellen eines Zwischenkanals nach Anspruch 9. Eine verbesserte Aerodynamik ist dadurch ermöglicht, dass der Zwischenkanal zumindest teilweise oder vollständig generativ gefertigt wird. Die generative Fertigung kann beispielsweise ein selektives Lasersinter- und/oder -schmelzverfahren sein. Weitere Merkmale und deren Vorteile sind den Beschreibungen des ersten Erfindungsaspekts zu entnehmen.

In einer vorteilhaften Ausgestaltung der Erfindung ist vorgesehen, dass die Außenwand und/oder die Innenwand und/oder der Abströmleitkranz und/oder die wenigstens eine Strebe mit wenigstens einem Hohlraum und/oder mit einer bionischen Bauform hergestellt wird. Hierdurch können Gewichtung und Festigkeit des Zwischengehäuses optimiert werden.

Ein dritter Aspekt der Erfindung betrifft eine Strömungsmaschine, insbesondere ein Flugtriebwerk, umfassend zumindest einen Niederdruckverdichter und einen Hochdruckverdichter. Ein verbesserter Wirkungsgrad der Strömungsmaschine ist erfindungsgemäß dadurch ermöglicht, dass zwischen einem Auslass des Niederdruckverdichters und einem Einlass des Hochdruckverdichters ein Zwischenkanal angeordnet ist, welcher gemäß dem ersten Erfindungsaspekt ausgebildet und/oder gemäß einem Verfahren nach dem zweiten Erfindungsaspekt hergestellt ist. Die sich hieraus ergebenden Merkmale und deren Vorteile sind den Beschreibungen des ersten und zweiten Erfindungsaspekts zu entnehmen

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen, soweit sie unter dem Wortlaut eines der unabhängigen Ansprüche fallen.

Dabei zeigt:

Fig. 1     einen perspektivischen Ausschnitt eines aus dem Stand der Technik bekannten Zwischenkanals;

Fig. 2     einen perspektivischen Ausschnitt eines Zwischenkanals, der nicht Teil der Erfindung ist;

Fig. 3     eine perspektivische Aufsicht auf eine Innenwand und eine Strebe des Zwischenkanals;

Fig. 4     eine perspektivische Aufsicht auf eine Außenwand und die Strebe des Zwischenkanals;

Fig. 5     eine perspektivische Ansicht zweier Halbschalen, aus welchen der Zwischenkanal besteht;

Fig. 6     eine schematische axiale Schnittansicht des Zwischenkanals;

Fig. 7     eine schematische radiale Schnittansicht des Zwischenkanals entlang einer in Fig. 6 gezeigten radialen Schnittebene A-A;

Fig. 8     einen schematischen Querschnitt einer Strebe des Zwischenkanals;

Fig. 9     eine schematische axiale Schnittansicht des Zwischenkanals gemäß einem Ausführungsbeispiel der Erfindung;

Fig. 10     ein Diagramm eines radialen Konturverlaufs im Bereich einer Hinterkante der Strebe;

Fig. 11     einen schematischen Querschnitt eines weiteren Ausführungsbeispiels der Strebe, welches Beispiel nicht Teil der Erfindung ist;

Fig. 12     eine schematische axiale Schnittansicht des Zwischenkanals gemäß einem weiteren Ausführungsbeispiel, welches Beispiel nicht Teil der Erfindung ist;

Fig. 13     einen schematischen Querschnitt eines weiteren Ausführungsbeispiels der Strebe, welches Beispiel nicht Teil der Erfindung ist.

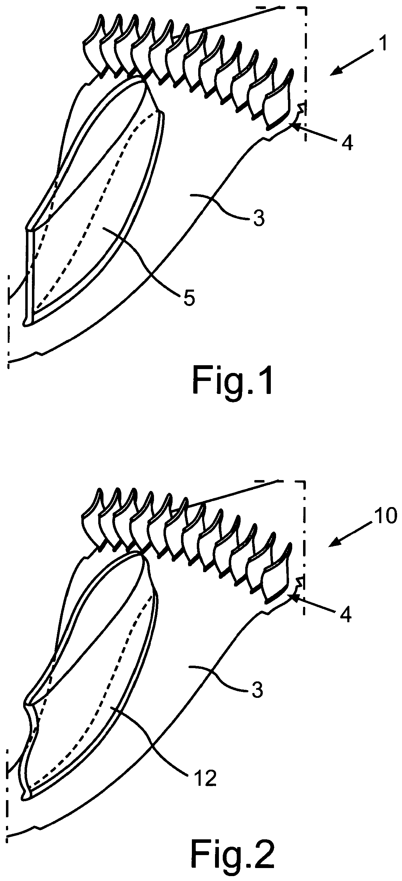

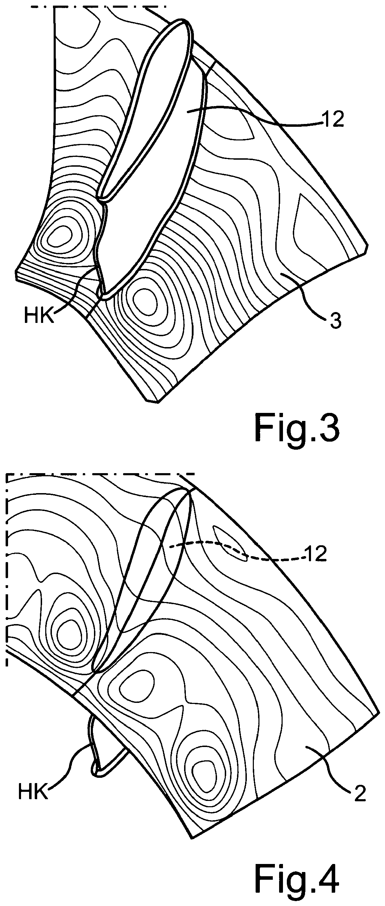

**Fig. 1** zeigt einen perspektivischen Ausschnitt eines aus dem Stand der Technik bekannten Zwischenkanals 1. Die Basisgeometrie des radialsymmetrischen Zwischenkanals 1 ("Inter Compressor Duct" -ICD) leitet sich aus dem Anspruch ab, die Strömung durch den Zwischenkanal 1 hindurch auf einen deutlich kleineren Radius umzulenken und dabei möglichst wenig aerodynamische Verluste zu erzeugen und eine möglichst hohe Uniformität der Strömung am Austritt des Zwischenkanals 1 zu gewährleisten. Der Zwischenkanal 1 (ICD) weist neben einer Außenwand 2 (s. Fig. 4) und einer Innenwand 3 am Eingang des Zwischenkanals 1 einen aerodynamisch profilierten Abströmleitkranz 4 (OGV, Outlet guide vane) mit einer hohen Schaufelanzahl auf. Generell entspricht die Schaufelzahl zumindest ungefähr der Schaufelzahl einer stromauf laufenden letzten Verdichterrotorstufe (low pressure compressor, LPC). Stromab des Abströmleitkranzes 4 befinden sich mehrere in Umfangsrichtung beabstandet angeordnete Streben 5 (sog. Struts, Stützrippen), die wesentlich die Außenwand 2 und die Innenwand 3 verbinden und strukturmechanisch abstützen. Das Verhältnis von Schaufeln des Abströmleitkranzes 4 zu Streben 5 kann generell zwischen etwa 8:1 und etwa 16:1 variiert werden und beispielsweise 12:1 betragen. Die Herstellung des Zwischenkanals 1 (ICDs) erfordert die Bereitstellung komplexer Bauteile, d.h. einem OGV 4 mit Ringen und Leitschaufeln, sowie einem (oder mehreren) Bauteilen für jeweils Außen- und Innenwand 2, 3 des Zwischenkanals 1 sowie den einzelnen Streben (Struts) 5, die die Außen- und Innenwand 2, 3 verbinden. Die Bauteile des Zwischenkanals 1 sind als Feingußteile sowie durch Dreh- und Fräsverfahren ausgebildet und weisen daher vergleichsweise einfache Geometrien mit geschlossenen Formen aus Vollmaterial auf. Aufgrund der Steilheit des Zwischenkanals 1 ist eine integrale Herstellung komplexerer Geometrien mit konventionellen Guß-, Dreh- und Fräsverfahren nicht oder kaum (wirtschaftlich) umsetzbar.

**Fig. 2** zeigt einen perspektivischen Ausschnitt eines Zwischenkanals 10, der additiv mit Hilfe eines Laserschmelzverfahrens hergestellt ist. Die Fertigung des Zwischenkanals 10 (ICD) in additiver Fertigung umgeht diese oben genannten Nachteile und ist im Wesentlichen durch Limitierung der Bauteilgrößen durch die zur Herstellung verwendete Maschine beschränkt. Man erkennt, dass die exemplarisch gezeigte Strebe 12 eine komplexe, gewölbte Struktur ("S-Schlag") besitzt, wodurch diese je nach Ausgestaltung eine aerodynamische Funktion zum Aufprägen eines Dralls der Strömung oder zum Gleichrichten der Strömung bewirken kann. In manchen Ausgestaltungen des Zwischenkanals 10 kann daher sogar auf einen Abströmleitkranz 4 vollständig verzichtet werden. Dies erlaubt eine zusätzliche Längenreduktion des Zwischenkanals 10, wodurch weiter Gewichts- und Bauraumeinsparungen möglich sind. Da die wesentliche Funktion des Zwischenkanals 10 neben dem geometrischen Anschluss von Nieder- und Hochdruckverdichter in der möglichst verlustarmen Umlenkung der Strömung liegt, ist die Lastaufnahme des Bauteils begrenzt. Daher kann der Zwischenkanal 10 in Form einer bionischen Hohlstruktur hergestellt werden.

**Fig. 3** zeigt eine perspektivische Aufsicht auf die Innenwand 3 und die Strebe 12 des Zwischenkanals 10, während **Fig. 4** eine perspektivische Aufsicht auf die Außenwand 2 und die Strebe 12 des Zwischenkanals 10 zeigt. Man erkennt, dass aufgrund der generativen Herstellung alternativ oder zusätzlich zur komplexen Geometrie der Strebe 12 auch komplexe dreidimensionale Strukturen der Außen- und/oder Innenwand 2, 3 darstellbar sind. Dabei sind exemplarisch mit rot gefärbten Höhenlinienbereichen stromabliegende relative Erhöhungen und mit blau gefärbten Höhenlinienbereichen stromaufliegende relative Vertiefungen gezeigt. Auf den hinteren 30% der Sehnenlänge der Strebe 12 ist im Design für aerodynamische Verlustreduktion folgende Konturierung (pro Strutsektion) vorzusehen:

- Innenwand 3:
  Variation der Innenwand-Radien im Bereich mit einem Einzug von bis zu ca. 5 % in den Kanal mit maximaler Höhenvariation in der Nähe der Hinterkante HK, am Kanaleinlauf schwach variierende lokal ringförmige Relaxation bzw. Ausformung nach außen.

- Außenwand 2:
  Variation der Außenwand-Radien im Bereich von ca. 2-3% mit zwei Konturierungen nach au-ßen, am Kanaleinlauf dagegen eine schwach variierende ringförmige Einschnürung. Abweichende Geometrien sind ebenfalls denkbar.

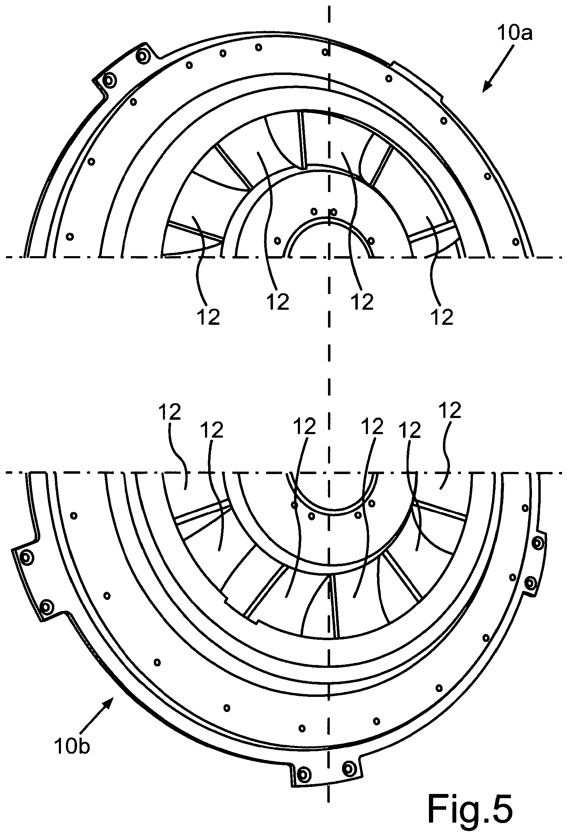

**Fig. 5** zeigt eine perspektivische Ansicht zweier Halbschalen 10a, 10b, aus welchen der Zwischenkanal 10 besteht bzw. bei der Montage zusammengesetzt wird. Man erkennt die über den Umfang verteilt angeordneten Streben 12 und die dazwischen liegenden Strömungsöffnungen des Zwischenkanals 10. Die in Fig. 5 nicht erkennbare Hinterseite wird an einen Auslass eines Niederdruckverdichters (nicht gezeigt) eines Flugtriebwerks montiert, während eine Vorderseite an einem Einlass eines Hochdruckverdichters (nicht gezeigt) montiert wird.

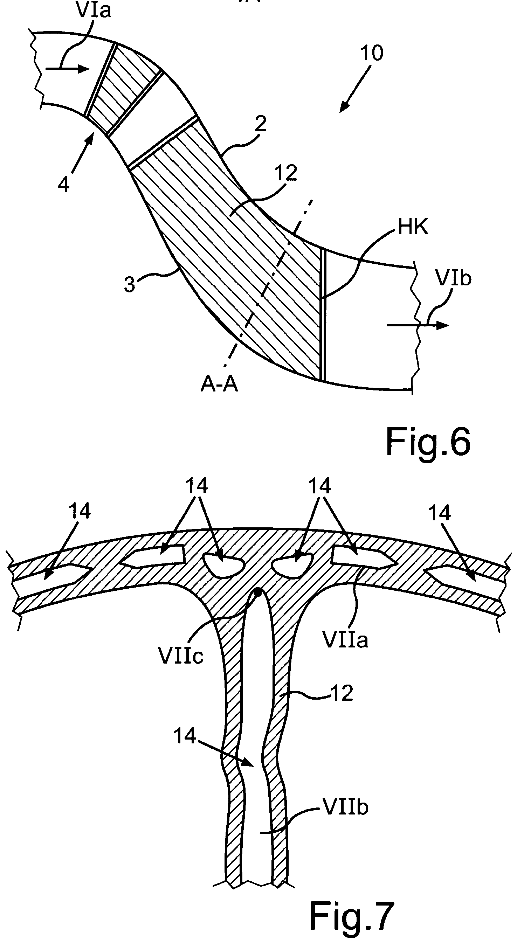

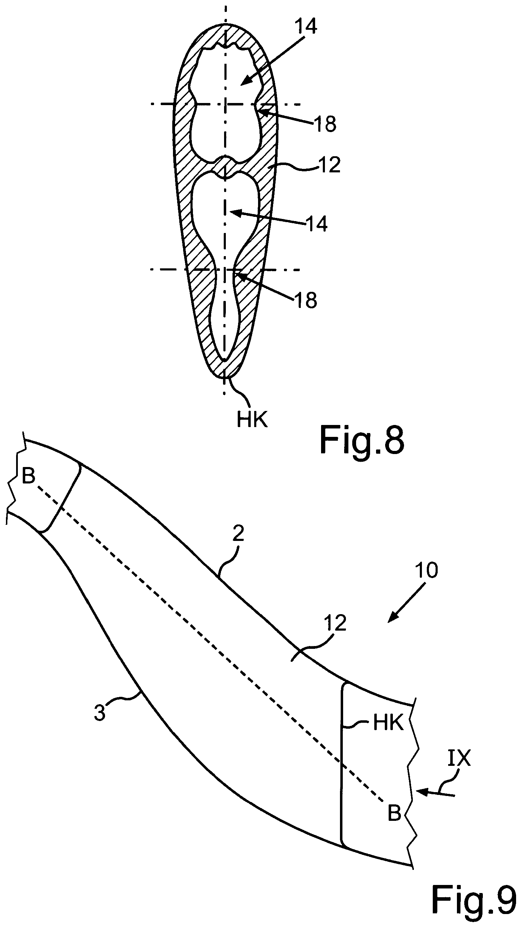

**Fig. 6** zeigt eine schematische axiale Schnittansicht des Zwischenkanals 10 und wird im Folgenden in Zusammenschau mit **Fig. 7** und **Fig. 8** erläutert. **Fig. 7** zeigt eine schematische radiale Schnittansicht des Zwischenkanals 10 entlang einer in Fig. 6 gezeigten radialen Schnittebene A-A, während **Fig. 8** einen schematischen Querschnitt der Strebe 12 des Zwischenkanals 10 zeigt in ca. 65% radialer Tiefe. Man erkennt, dass das gemäß Pfeil VIa vom Niederdruckverdichter in den Zwischenkanal 10 gelangende Betriebsfluid durch den optionalen Abströmleitkranz 4 strömt, radial nach Innen umgelenkt wird, an den Stützen 12 vorbeiströmt und gemäß Pfeil VIb zum Hochdruckverdichter weiterströmt. Wie man in Fig. 7 sieht, weisen die Außenwand 2 und die Strebe 12 eine bionische Bauform mit zahlreichen Hohlräumen 14 auf. Gleiches gilt für die nicht gezeigte Innenwand 3. Im Bereich VIIa können die am Gaspfad angrenzenden Wandstärken unter Erhalt der Hohlstrukturen so minimiert werden, so dass die Gaspfadlasten (Impuls, Druck, Wandreibung) ertragen werden und die Materialkenngrößen optimal genutzt werden. Im Bereich VIIb kann die Strebe 12 hohl mit minimaler Wandstärke und ggf. lokal (Vorder- und Hinterkante) verstärkt optimal ausgelegt werden. Weiterhin können Kanäle 16 für Versorgungsleitungen (Ölleitungen etc.) vorgesehen sein. Im Bereich VIIc können gegebenenfalls axiale Lasten über die Außenwand 2 direkt entlang der Rippenstruktur VIIa abgeleitet oder Lasten von den Stützen 12 über lokal verstärkte Hohlstrukturen in der Anbindung von der Strebe 12 in die Außenwand 2 gewichtsoptimiert eingetragen werden. In Fig. 8 erkennt man, dass die Strebe 12 zwei Hohlräume 14 umfasst, die generell eine ovale Form mit jeweils etwa mittigen Einschnürungen 18 aufweisen. Der Füllgrad der wenigstens einen Strebe beträgt bei dieser Ausführung etwa 18%.

**Fig. 9** zeigt eine schematische axiale Schnittansicht des Zwischenkanals 10 gemäß einem erfindungsgemäßen Ausführungsbeispiel. Man erkennt, dass aufgrund der gewölbten, aerodynamisch optimierten Ausgestaltung der Strebe(n) 12 auf einen Abströmleitkranz 4 verzichtet werden kann.

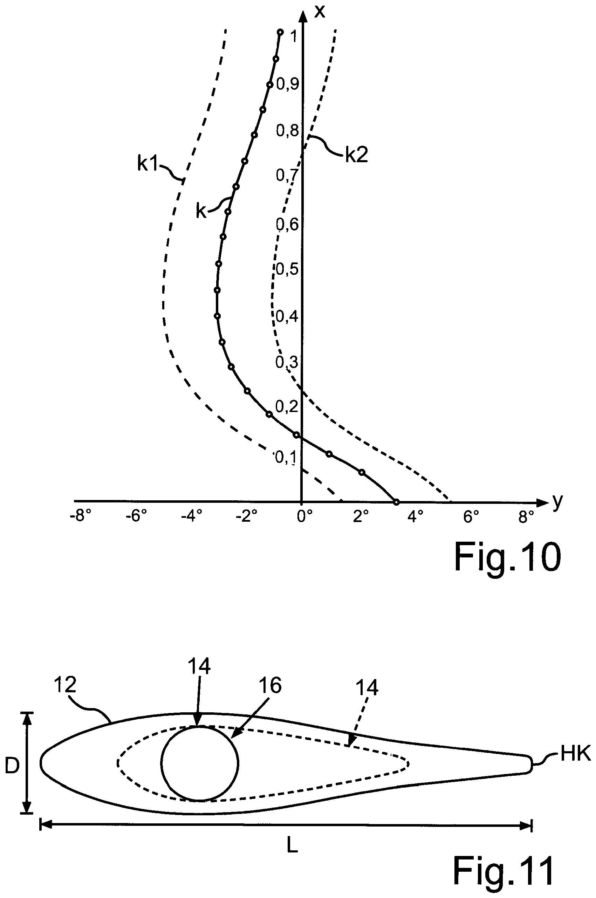

**Fig. 10** zeigt ein Diagramm eines radialen Konturverlaufs K im Bereich einer Hinterkante HK der in Fig. 9 gezeigten Strebe 12 gemäß der in Fig. 9 gezeigten Blickrichtung IX. Auf der x-Achse ist in 10 %-Schritten die radiale Erstreckung der Strebe 12 ausgehend von der Innenwand 3 (x=0) zur Außenwand 2 (x=1) aufgetragen, während auf der y-Achse die Abweichung in Winkelgrad von einer hypothetischen, linearen Hinterkante (y=0°) aufgetragen ist. Zusätzlich sind eine erste Grenzkontur K1 und eine zweite Grenzkontur K2 dargestellt, welche einen Bereich begrenzen, innerhalb dessen die Kontur K der Strebe 12 frei variiert werden kann. Die erste Grenzkontur K1 wird näherungsweise durch die Formel (I)

$$y = 71.14x^5 - 179.74x^4 + 134.76x^3 - 2.6539x^2 - 27.72x + 5.5815 \text{ (I)}$$

und die zweite Grenzkontur durch die Formel (II)

$$y = 71.14x^5 - 179.74x^4 + 134.76x^3 - 2.6539x^2 - 27.72x + 1.5815 \text{ (II)}$$

definiert. Die exemplarisch gezeigte Kontur K wird näherungsweise durch die Formel (III)

$$y = 71.14x^5 - 179.74x^4 + 134.76x^3 - 2.6539x^2 - 27.72x + 3.5815 \text{ (III)}$$

definiert.

**Fig. 11** zeigt einen schematischen Querschnitt entlang der in Fig. 9 gezeigten Schnittebene B-B eines weiteren Ausführungsbeispiels der Strebe 12. Man erkennt, dass ein Füllgrad der Strebe 12 zwischen 84 % (durchgezogener Hohlraum 14) und 64 % (gestrichelter Hohlraum 14) variiert werden kann. Der Hohlraum 14 weist ähnlich einem menschlichen Knochen Stützstreben 13 auf. Das Dickenverhältnis D/L kann vorliegend zwischen 17 % und 35 % variiert werden. Der Hohlraum 14 kann nach Art einer Durchbohrung als Kanal 16 zum Durchleiten von Öl, Luft oder anderen Betriebsfluiden ausgebildet sein und radial innere und äußere Anschlüsse aufweisen.

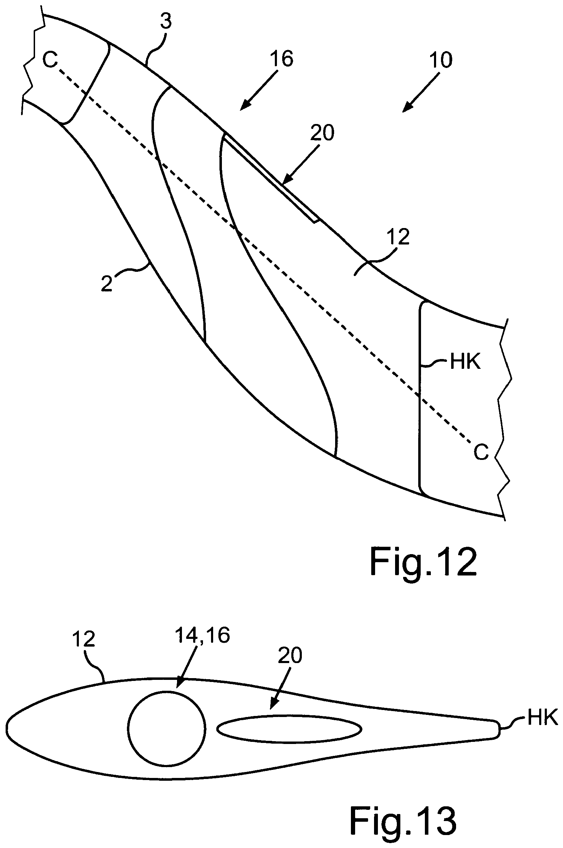

**Fig. 12** zeigt eine schematische axiale Schnittansicht des Zwischenkanals 10 gemäß einem weiteren Ausführungsbeispiel, während **Fig. 13** einen schematischen Querschnitt eines weiteren Ausführungsbeispiels der Strebe 12 entlang der in Fig. 12 gezeigten Schnittebene C-C zeigt. Man erkennt, dass die Strebe 12 einen Hohlraum 14 aufweist, der als durchgehender Kanal 16 ausgebildet ist. Wenigstens zwei Querschnitte des Kanals 16, wie beispielsweise die beiden Querschnitte beim Eintritt und Austritt aus der Strebe 12 sind versetzt zueinander angeordnet, so dass ein Herstellen des Kanals 16 beispielsweise mittels eines Bohrers nicht möglich ist. Der Kanal 16 mündet im Bereich der Innenwand 3 in eine Austrittsfläche 20, um eine Nabe (nicht gezeigt) der Strömungsmaschine mit Öl, Luft oder dergleichen zu versorgen. Das Dickenverhältnis D/L beträgt auch bei dieser Ausführungsform zwischen 17 % und 35 %.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

Der Schutzumfang wird ausschließlich von den nachstehenden Ansprüchen definiert.

Bezugszeichenliste:

1    Zwischenkanal
2    Außenwand
3    Innenwand
4    Abströmleitkranz
5    Streben
10   Zwischenkanal
10a  Halbschale
10b  Halbschale

| | |
|---|---|
| 12 | Strebe |
| 13 | Stützstrebe |
| 14 | Hohlraum |
| 16 | Kanal |
| 18 | Einschnürungen |
| 20 | Austrittsfläche |
| D | Dicke |
| L | Länge |
| HK | Hinterkante |
| K1 | erste Grenzkontur |
| K2 | zweite Grenzkontur |

**Patentansprüche**

1. Zwischenkanal (10) zur Anordnung zwischen einem Auslass eines Niederdruckverdichters und einem Einlass eines Hochdruckverdichters einer Strömungsmaschine, insbesondere eines Flugtriebwerks, umfassend

   eine Außenwand (2) und
   eine Innenwand (3),
   zwischen welchen ein optionaler Abströmleitkranz (4) und wenigstens eine bezüglich einer Mittelachse des Zwischenkanals (10) radiale Strebe (12) angeordnet sind,
   wobei der Zwischenkanal (10) zumindest teilweise generativ gefertigt ist,

   **dadurch gekennzeichnet,**

   **dass** der radiale Verlauf der wenigstens einen Strebe (12) zumindest im Bereich ihrer Hinterkante (HK) zumindest im Wesentlichen innerhalb einer ersten Grenzkontur (K1) und einer zweiten Grenzkontur (K2) liegt, wobei die erste Grenzkontur (K1) durch die Formel (I)

   $$y = 71.14x^5 - 179.74x^4 + 134.76x^3 - 2.6539x^2 - 27.72x + 5.5815 \; [°] \; (I)$$

   und die zweite Grenzkontur durch die Formel (II)

   $$y = 71.14x^5 - 179.74x^4 + 134.76x^3 - 2.6539x^2 - 27.72x + 1.5815 \; [°] \; (II)$$

   definiert ist, in welchen x die prozentuale radiale Höhe der Strebe (12) im Bereich ihrer Hinterkante (HK) ausgehend von der Innenwand (3) des Zwischenkanals (10) und y die graduelle Abweichung in Umfangsrichtung von einer hypothetischen linearen Hinterkantenkontur mit einem konstanten radialen Verlauf bei 0° bezeichnen.

2. Zwischenkanal (10) nach Anspruch 1,
   **dadurch gekennzeichnet, dass**
   dieser aus mindestens zwei miteinander verbundenen Segmenten (10a, 10b) besteht.

3. Zwischenkanal (10) nach Anspruch 1 oder 2,
   **dadurch gekennzeichnet, dass**
   die Außenwand (2) und/oder die Innenwand (3) und/oder der Abströmleitkranz (4) und/oder die wenigstens eine Strebe (12) wenigstens einen Hohlraum (14) umfasst.

4. Zwischenkanal (10) nach Anspruch 3,
   **dadurch gekennzeichnet, dass**
   der wenigstens eine Hohlraum (14) offen oder geschlossen ausgebildet ist und/oder dass der wenigstens eine Hohlraum (14) im Querschnitt rund oder oval ausgebildet ist und/oder dass wenigstens zwei Querschnitte des wenigstens einen Hohlraums versetzt zueinander angeordnet sind und/oder dass der wenigstens eine Hohlraum (14) wenigstens eine Einschnürung (18) aufweist und/oder dass der Hohlraum (14) durch wenigstens eine Stützstrebe (13) abgestützt ist.

5. Zwischenkanal (10) nach einem der Ansprüche 3 bis 4,
   **dadurch gekennzeichnet, dass**
   die wenigstens eine Strebe (12) einen Hohlraum (14) umfasst, der einen Kanal (16) mit einer Einlassöffnung und einer Auslassöffnung zum Durchleiten eines Betriebsfluids durch den Zwischenkanal (10) bildet.

6. Zwischenkanal (10) nach einem der Ansprüche 3 bis 5,
   **dadurch gekennzeichnet, dass**
   ein Füllgrad der wenigstens einen Strebe (12) zwischen 15 % und 95 % und insbesondere zwischen 50 % und 90 % beträgt.

7. Zwischenkanal (10) nach einem der Ansprüche 1 bis 6,
   **dadurch gekennzeichnet, dass**
   ein Dickenverhältnis (D/L) von maximaler Dicke (D) zu axialer Länge (L) der wenigstens einen Strebe zwischen 15 % und 45 % beträgt.

8. Zwischenkanal (10) nach einem der Ansprüche 1 bis 7,
   **dadurch gekennzeichnet, dass**
   dieser zumindest überwiegend aus einer Titanlegierung, insbesondere aus Titan 6246, oder aus einer Nickelbasislegierung, insbesondere aus IN100, besteht.

9. Verfahren zum Herstellen eines Zwischenkanals (10), welcher zwischen einem Auslass eines Niederdruckverdichters und einem Einlass eines Hochdruckverdichters einer Strömungsmaschine, insbesondere eines Flugtriebwerks, anzuordnen ist und eine Außenwand (2) und eine Innenwand (3), zwischen welchen ein optionaler Abströmleitkranz (4) und wenigstens eine bezüglich einer Mittelachse des Zwischenkanals radiale Strebe (12) angeordnet sind, umfasst,

   wobei der Zwischenkanal (10) zumindest teilweise generativ gefertigt wird,
   **dadurch gekennzeichnet,**
   **dass** der radiale Verlauf der wenigstens einen Strebe (12) zumindest im Bereich ihrer Hinterkante (HK) zumindest im Wesentlichen innerhalb einer ersten Grenzkontur (K1) und einer zweiten Grenzkontur (K2) liegt, wobei die erste Grenzkontur (K1) durch die Formel (I)

$$y = 71.14x^5 - 179.74x^4 + 134.76x^3 - 2.6539x^2 - 27.72x + 5.5815 \ [°] \ (I)$$

   und die zweite Grenzkontur durch die Formel (II)

$$y = 71.14x^5 - 179.74x^4 + 134.76x^3 - 2.6539x^2 - 27.72x + 1.5815 \ [°] \ (II)$$

   definiert ist, in welchen x die prozentuale radiale Höhe der Strebe (12) im Bereich ihrer Hinterkante (HK) ausgehend von der Innenwand (3) des Zwischenkanals (10) und y die graduelle Abweichung in Umfangsrichtung von einer hypothetischen linearen Hinterkantenkontur mit einem konstanten radialen Verlauf bei 0° bezeichnen.

10. Verfahren nach Anspruch 9,
    **dadurch gekennzeichnet, dass**
    die Außenwand (2) und/oder die Innenwand (3) und/oder der Abströmleitkranz (4) und/oder die wenigstens eine Strebe (12) mit wenigstens einem Hohlraum (14) und/oder mit einer bionischen Bauform hergestellt wird.

11. Strömungsmaschine, insbesondere Flugtriebwerk, umfassend zumindest einen Niederdruckverdichter und einen Hochdruckverdichter,
    **dadurch gekennzeichnet, dass**
    zwischen einem Auslass des Niederdruckverdichters und einem Einlass des Hochdruckverdichters ein Zwischenkanal (10) angeordnet ist, welcher gemäß einem der Ansprüche 1 bis 8 ausgebildet und/oder gemäß einem Verfahren nach einem der Ansprüche 9 oder 10 hergestellt ist.

**Claims**

1. Intermediate channel (10) for arrangement between an outlet of a low-pressure compressor and an inlet of a high-pressure compressor of a turbomachine, in particular of an aircraft engine, comprising

   an outer wall (2) and
   an inner wall (3),
   between which an optional outflow stator ring (4) and at least one strut (12), which is radial with respect to a central axis of the intermediate channel (10), are arranged,
   the intermediate channel (10) being additively manufactured at least in part, **characterized in that** the radial profile of the at least one strut (12) lies, at least in the region of its trailing edge (HK), at least substantially within a first boundary contour (K1) and a second boundary contour (K2), the first boundary contour (K1) being defined by formula (I)

   $$y = 71.14x^5 - 179.74x^4 + 134.76x^3 - 2.6539x^2 - 27.72x + 5.5815 \ [°] \ (I)$$

   and the second boundary contour being defined by formula (II)

   $$y = 71.14x^5 - 179.74x^4 + 134.76x^3 - 2.6539x^2 - 27.72x + 1.5815 \ [°] \ (II),$$

   in which x denotes the percentage radial height of the strut (12) from the inner wall (3) of the intermediate channel (10) in the region of its trailing edge (HK), and y denotes the gradual deviation in the circumferential direction from a hypothetical linear trailing edge contour having a constant radial profile at 0°.

2. Intermediate channel (10) according to claim 1,
   **characterized in that**
   the intermediate channel consists of at least two interconnected segments (10a, 10b).

3. Intermediate channel (10) according to claim 1 or 2,
   **characterized in that**
   the outer wall (2) and/or the inner wall (3) and/or the outflow stator ring (4) and/or the at least one strut (12) comprises at least one cavity (14).

4. Intermediate channel (10) according to claim 3,
   **characterized in that**
   the at least one cavity (14) is designed to be open or closed, and/or **in that** the at least one cavity (14) is circular or oval in cross section, and/or **in that** at least two cross sections of the at least one cavity are arranged offset relative to one another, and/or **in that** the at least one cavity (14) has at least one constriction (18), and/or **in that** the cavity (14) is supported by at least one support strut (13).

5. Intermediate channel (10) according to any of claims 3 to 4,
   **characterized in that**
   the at least one strut (12) comprises a cavity (14) which forms a channel (16) having an inlet opening and an outlet opening in order to conduct an operating fluid through the intermediate channel (10).

6. Intermediate channel (10) according to any of claims 3 to 5,
   **characterized in that**
   a filling level of the at least one strut (12) is between 15% and 95%, and in particular between 50% and 90%.

7. Intermediate channel (10) according to any of claims 1 to 6,
   **characterized in that**
   a thickness ratio (D/L) of the maximum thickness (D) to the axial length (L) of the at least one strut is between 15% and 45%.

**8.** Intermediate channel (10) according to any of claims 1 to 7,
**characterized in that**
the intermediate channel consists at least predominantly of a titanium alloy, in particular of titanium 6246, or of a nickel-based alloy, in particular of IN 100.

**9.** Method for producing an intermediate channel (10) which is to be arranged between an outlet of a low-pressure compressor and an inlet of a high-pressure compressor of a turbomachine, in particular of an aircraft engine, and comprises an outer wall (2) and an inner wall (3), between which an optional outflow stator ring (4) and at least one strut (12), which is radial with respect to a central axis of the intermediate channel, are arranged, the intermediate channel (10) being additively manufactured at least in part, **characterized in that**

the radial profile of the at least one strut (12) lies, at least in the region of its trailing edge (HK), at least substantially within a first boundary contour (K1) and a second boundary contour (K2), the first boundary contour (K1) being defined by formula (I)

$$y = 71.14x^5 - 179.74x^4 + 134.76x^3 - 2.6539x^2 - 27.72x + 5.5815 \; [°] \; (I)$$

and the second boundary contour being defined by formula (II)

$$y = 71.14x^5 - 179.74x^4 + 134.76x^3 - 2.6539x^2 - 27.72x + 1.5815 \; [°] \; (II),$$

in which x denotes the percentage radial height of the strut (12) from the inner wall (3) of the intermediate channel (10) in the region of its trailing edge (HK), and y denotes the gradual deviation in the circumferential direction from a hypothetical linear trailing edge contour having a constant radial profile at 0°.

**10.** Method according to claim 9,
**characterized in that**
the outer wall (2) and/or the inner wall (3) and/or the outflow stator ring (4) and/or the at least one strut (12) is produced with at least one cavity (14) and/or with a bionic design.

**11.** Turbomachine, in particular an aircraft engine, comprising at least one low-pressure compressor and a high-pressure compressor,
**characterized in that**
an intermediate channel (10) is arranged between an outlet of the low-pressure compressor and an inlet of the high-pressure compressor, which intermediate channel is designed according to any of claims 1 to 8 and/or is produced according to a method according to either of claims 9 or 10.

**Revendications**

**1.** Canal intermédiaire (10) destiné à être disposé entre une sortie d'un compresseur basse pression et une entrée d'un compresseur haute pression d'une turbomachine, en particulier d'un moteur d'aéronef, comprenant

une paroi externe (2) et
une paroi interne (3),
entre lesquelles sont disposées une couronne directrice d'écoulement (4) optionnelle et au moins une entretoise (12) radiale par rapport à un axe central du canal intermédiaire (10),
dans lequel le canal intermédiaire (10) est fabriqué au moins partiellement de manière générative, **caractérisé en ce que** le tracé radial de l'au moins une entretoise (12), au moins dans la zone de son bord de fuite (HK), se situe au moins sensiblement à l'intérieur d'un premier contour limite (K1) et d'un second contour limite (K2), dans lequel le premier contour limite (K1) est défini par la formule (I)

$$y = 71.14x^5 - 179.74x^4 + 134.76x^3 - 2.6539x^2 - 27.72x + 5.5815 \; [°] \; (I)$$

et le second contour limite est défini par la formule (II)

$$y = 71.14x^5 - 179.74x^4 + 134.76x^3 - 2.6539x^2 - 27.72x + 1.5815 \ [°] \ (II)$$

dans lesquelles x représente la hauteur radiale en pourcentage de l'entretoise (12) dans la zone de son bord de fuite (HK) à partir de la paroi interne (3) du canal intermédiaire (10) et y représente la déviation graduelle dans la direction circonférentielle par rapport à un contour de bord de fuite linéaire hypothétique comportant un tracé radial constant à 0°.

2. Canal intermédiaire (10) selon la revendication 1,
**caractérisé en ce que**
celui-ci est constitué d'au moins deux segments (10a, 10b) reliés l'un à l'autre.

3. Canal intermédiaire (10) selon la revendication 1 ou 2,
**caractérisé en ce que**
la paroi externe (2) et/ou la paroi interne (3) et/ou la couronne directrice d'écoulement (4) et/ou l'au moins une entretoise (12) comprennent au moins une cavité (14).

4. Canal intermédiaire (10) selon la revendication 3,
**caractérisé en ce que**
l'au moins une cavité (14) est ouverte ou fermée **et/ou en ce que** l'au moins une cavité (14) est ronde ou ovale en section transversale **et/ou en ce qu'**au moins deux sections transversales de l'au moins une cavité sont décalées l'une par rapport à l'autre **et/ou en ce que** l'au moins une cavité (14) présente au moins un rétrécissement (18) **et/ou en ce que** la cavité (14) est soutenue par au moins une entretoise de soutien (13).

5. Canal intermédiaire (10) selon l'une des revendications 3 à 4,
**caractérisé en ce que**
l'au moins une entretoise (12) comprend une cavité (14) qui forme un canal (16) comportant une ouverture d'entrée et une ouverture de sortie permettant de faire passer un fluide de fonctionnement à travers le canal intermédiaire (10).

6. Canal intermédiaire (10) selon l'une des revendications 3 à 5,
**caractérisé en ce que**
un degré de remplissage de l'au moins une entretoise (12) est compris entre 15 % et 95 % et en particulier entre 50 % et 90 %.

7. Canal intermédiaire (10) selon l'une des revendications 1 à 6,
**caractérisé en ce que**
un rapport d'épaisseur (D/L) de l'épaisseur maximale (D) à la longueur axiale (L) de l'au moins une entretoise est compris entre 15 % et 45 %.

8. Canal intermédiaire (10) selon l'une des revendications 1 à 7,
**caractérisé en ce que**
celui-ci est constitué au moins principalement d'un alliage de titane, en particulier de titane 6246, ou d'un alliage à base de nickel, en particulier d'IN100.

9. Procédé permettant la production d'un canal intermédiaire (10), lequel doit être disposé entre une sortie d'un compresseur basse pression et une entrée d'un compresseur haute pression d'une turbomachine, en particulier d'un moteur d'aéronef, et comprend une paroi externe (2) et une paroi interne (3) entre lesquelles sont disposées une couronne directrice d'écoulement (4) optionnelle et au moins une entretoise (12) radiale par rapport à un axe central du canal intermédiaire, dans lequel le canal intermédiaire (10) est fabriqué au moins partiellement de manière générative, **caractérisé en ce que** le tracé radial de l'au moins une entretoise (12), au moins dans la zone de son bord de fuite (HK), se situe au moins sensiblement à l'intérieur d'un premier contour limite (K1) et d'un second contour limite (K2), dans lequel le premier contour limite (K1) est défini par la formule (I)

$$y = 71.14x^5 - 179.74x^4 + 134.76x^3 - 2.6539x^2 - 27.72x + 5.5815 \ [°] \ (I)$$

et le second contour limite est défini par la formule (II)

$$y = 71.14x^5 - 179.74x^4 + 134.76x^3 - 2.6539x^2 - 27.72x + 1.5815 \ [°] \ (II)$$

dans lesquelles x représente la hauteur radiale en pourcentage de l'entretoise (12) dans la zone de son bord de fuite (HK) à partir de la paroi interne (3) du canal intermédiaire (10) et y représente la déviation graduelle dans la direction circonférentielle par rapport à un contour de bord de fuite linéaire hypothétique comportant un tracé radial constant à 0°.

10. Procédé selon la revendication 9,
**caractérisé en ce que**
la paroi externe (2) et/ou la paroi interne (3) et/ou la couronne directrice d'écoulement (4) et/ou l'au moins une entretoise (12) sont produites avec au moins une cavité (14) et/ou avec une forme de construction bionique.

11. Turbomachine, en particulier moteur d'aéronef, comprenant au moins un compresseur basse pression et un compresseur haute pression,
**caractérisée en ce qu'**un canal intermédiaire (10) est disposé entre une sortie du compresseur basse pression et une entrée du compresseur haute pression, lequel canal intermédiaire est conçu selon l'une des revendications 1 à 8 et/ou produit conformément à un procédé selon l'une des revendications 9 ou 10.

Fig.1

Fig.2

Fig.3

Fig.4

Fig.5

Fig.6

Fig.7

Fig.8

Fig.9

Fig.10

Fig.11

Fig.12

Fig.13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2010123413 A1
- WO 2017118806 A1
- WO 2013165281 A1
- EP 1632648 A2
- EP 2669474 A1
- US 2011008156 A1